# EUROPÄISCHE PATENTSCHRIFT

(11) **EP 1 256 160 B1**
(45) Veröffentlichungstag und Bekanntmachung des Hinweises auf die Patenterteilung: **16.11.2011**
(21) Anmeldenummer: 01964880.7
(22) Anmeldetag: 03.08.2001
(51) Int. Cl.: H02K 3/487

(54) **ANKER FÜR EINE ELEKTRISCHE MASCHINE SOWIE VERFAHREN ZU DESSEN HERSTELLUNG**
ARMATURE FOR AN ELECTRIC MACHINE AND METHOD FOR PRODUCING THE SAME
INDUIT POUR UNE MACHINE ELECTRIQUE ET PROCEDE DE FABRICATION DUDIT INDUIT

(30) Priorität: 07.10.2000 DE 10049699
(43) Veröffentlichungstag der Anmeldung: 13.11.2002
(73) Patentinhaber: ROBERT BOSCH GMBH, 70442 Stuttgart (DE)
(72) Erfinder: SCHWERDTLE, Martin, 71701 Schwieberdingen (DE)
(86) Internationale Anmeldenummer: PCT/DE2001/002963
(87) Internationale Veröffentlichungsnummer: WO 2002/031948

(56) Entgegenhaltungen:
- EP-A- 0 297 278
- DE-A- 2 627 647
- DE-A- 2 848 618

## Beschreibung

Die Erfindung betrifft einen Anker für eine elektrische Maschine, insbesondere für einen elektrischen Starter, gemäß Oberbegriff des Anspruchs 1 sowie ein Verfahren zu dessen Herstellung gemäß Oberbegriff des Anspruchs 12.

### Stand der Technik

Anker der hier angesprochenen Art sind bekannt. Sie enthalten eine Ankerwicklung und einen ferromagnetischen Grundkörper, wobei der Grundkörper über den Umfang verteilt angeordnete, axial verlaufende Nuten aufweist. Diese Nuten können im Querschnitt verschiedenartig ausgebildet sein und sind geeignet, elektrische Leiter der Ankerwicklung aufzunehmen. Derartige Anker weisen häufig eine unzulässig hohe Unwucht auf; sie sind daher in ihren Rundlaufeigenschaften nicht zufriedenstellend.

### Vorteile der Erfindung

Aus dem Stand der Technik ist beispielsweise die EP 0 297 278 A2 bekannt, welche den Läufer einer rotierenden Maschine betrifft. Der Läufer weist einen mit mehreren Nuten ausgebildeten Blechkern, in den Nuten des Blechkems gewickelte Wicklungen und Ansatzpaare auf, die an gegenüberliegenden Oberflächen der offenen Seite der Nuten vorgesehen sind. Die Ansätze werden durch Verformung teilweise geöffneter Teile der Nuten des Blechkerns gebildet, um ein Herausgleiten der Wicklungen zu verhindern. Weiter zeigt die DT 26 27 647 einen Rotor für eine elektrische Maschine mit Zähnen und Nuten, Zahnköpfen und Nutschlitzen. Dabei sollen die Köpfe der Zähne des Rotors im ungewickelten Zustand in radialer Richtung hornförmige Fortsätze aufweisen, wobei die hornförmigen Fortsätze nach dem Bewickeln des Rotors über den Nuten zusammenbiegbar sind. Weiter soll durch das Zusammenbiegen der hornförmigen Fortsätze die übliche Form der Zähne mit Zahnkopf und Nutschlitz herstellbar sein. Zusätzlich zeigt die DE 28 48 618 A1 eine elektrische Maschine mit den Nuten von Ständer oder Rotor eingelegten Wicklungen.

Der erfindungsgemäße Anker mit den in Anspruch 1 genannten Merkmalen zeichnet sich dadurch aus, dass mindestens ein, mittels mechanischer Verformung des Grundkörpers verlagertes, den elektrischen Leiter zu dessen definierten Positionierung und/oder Fixierung beaufschlagendes Nutrandbereichselement vorgesehen ist. Mittels dieses aus einer mechanischen Verformung des Grundkörpers verlagerten Nutrandbereichselements ist es möglich, einen in der Nut aufgenommenen elektrischen Leiter in einfacher Weise derart auszurichten, dass eine von einer Fehllage des Leiters beziehungsweise von einem unerwünschten Bewegungsspiel des Leiters in der Nut bei Rotation des Ankers hervorgerufene Unwucht verringert oder vermieden wird. Das Nutrandbereichselement drängt den Leiter in eine definierte Position und/oder Fixstellung im Innern der Nut. Eine Fixierung kann beispielsweise erzielt werden, indem der Leiter vom Nutrandbereichselement an mindestens eine Nutwandung und/oder an den Nutgrund gedrückt wird. Erfindungsgemäß ist das Nutrandbereichselement stegartig - die Öffung begrenzend- ausgebildet.

Es ist ferner vorgesehen, dass der Querschnitt der Nut langlochartig ausgebildet ist und dass sich die Längsachse des Langlochs in Radialrichtung des Ankers erstreckt. Mittels der langlochartigen Ausbildung der Nut ist es möglich, dass mehrere Leiter in der Nut aufgenommen sein können und zwar derart, dass die Leiter im Wesentlichen auf der Längsachse und zueinander benachbart angeordnet sind. Aufgrund der Anordnung des Langlochs in Radialrichtung des Ankers erfolgt bei dieser Ausführungsform eine Beaufschlagung von lediglich einem Leiter durch das Nutrandbereichselement, um die in der Nut aufgenommenen Leiter in eine definierte Position und/oder Fixstellung zu bringen. Der von dem Nutrandbereichselement beaufschlagte Leiter wird dabei gegen einen in der langlochartigen Nut nächstbenachbarten Leiter gedrängt bis beide Leiter in Anlagekontakt stehen. Dieser Vorgang wiederholt sich sukzessive von jeweils einem in der Nut radial außenliegenden Leiter zu einem beabstandeten, diesem nächstbenachbarten, radial innenliegenden Leiter.

Dabei ist vorgesehen, dass sich die Nut bis zu einer Mantelfläche des Grundkörpers erstreckt oder bis in die Nähe der Mantelfläche reicht und dass sich das Nutrandbereichselement in der Nähe der Mantelfläche befindet. Damit ist das vorhandene Nutrandbereichselement zur Erzielung einer mechanischen Verformung für ein Verformungswerkzeug leicht zugänglich.

Vorteilhafterweise ist das Nutrandbereichselement einstückig mit dem Grundkörper ausgebildet. Ebenso ist es möglich, dass das Nutrandbereichselement als ein separates Bauteil ausgebildet ist. Eine Wirkverbindung mit dem Grundkörper wird in diesem Fall dadurch erzielt, dass das Nutrandbereichselement beispielsweise in die Nut eingepasst oder mittels Schrauben mit der Nut verschraubt ist. Gegenüber dieser mehrstückigen Ausführungsform ist die einstückige Ausbildung des Nutrandbereichselements mit dem Grundkörper weniger aufwändig herstellbar.

Es ist vorgesehen, dass sich das Nutrandbereichselement über die vollständige Nutlänge erstreckt. Alternativ ist ferner vorgesehen, dass mehrere Nutrandbereichselemente über die Nutlänge verteilt angeordnet sind, da es in der Praxis oftmals ausreichend ist, dass der Leiter nur in Zonen beaufschlagt wird.

Es ist weiterhin vorgesehen, dass die Nut einen Nutgrund, zwei Seitenwände und eine Öffnung aufweist und dass das Nutrandbereichselement im Bereich mindestens eines Übergangs von einer Seitenwand zur Öffnung angeordnet ist. Das Nutrandbereichselement kann an der einen Seitenwand oder an der dieser gegenüberliegenden Seitenwand der Nut im Bereich des Übergangs von der jeweiligen Seitenwand zur Öffnung angeordnet sein. Alternativ ist es möglich, dass jede der beiden Seitenwände ein Nutrandbereichselement aufweist, das heißt, dass zwei Nutrandbereichselemente zur definierten Positionierung und/oder Fixierung der Leiter in der Nut vorgesehen sind.

Gemäß einer bevorzugten Ausführungsform ist die vom Nutrandbereichselement begrenzte lichte Weite der Öffnung kleiner als der Durchmesser beziehungsweise das Breitenmaß des Leiters. Die vom Nutrandbereichselement gebildete Öffnungsbegrenzung ist damit derart ausgebildet, dass ein unerwünschtes Austreten des Leiters aus der Nut vermieden wird. Die Öffnungsbegrenzung der Nut stellt ferner in Bezug auf die gewünschte Verformung eine verformungsgünstige Ausgestaltung dar.

Vorzugsweise ist vorgesehen, dass das Nutrandbereichselement brückenartig -sich von einer Seitenwand zur anderen Seitenwand erstreckend- ausgebildet ist. Bei einer brückenartigen Ausbildung des Nutrandbereichselements ist die Nut im Bereich der Mantelfläche des Grundkörpers geschlossen. Eine solche nutschließende Ausbildung des Nutrandbereichselements ermöglicht zusätzlich zur definierten Positionierung und/oder Fixierung des in der Nut aufgenommenen Leiters einen verbesserten magnetischen Fluss gegenüber stegartig ausgebildeten Nutrandbereichselementen, durch deren Verwendung die Nut im Bereich der Mantelfläche des Grundkörpers geöffnet bleibt.

Nach einer Weiterbildung des Ankers ist vorgesehen, dass das Nutrandbereichselement eine Dicke von 0,1 mm bis 0,5 mm, vorzugsweise 0,3 mm, aufweist. Bei einer solchen Dicke lässt sich der magnetische Fluss geringfügig erhöhen, beispielsweise mittels einer durch das Nutrandbereichselement hervorgerufenen Vergrößerung der Grundkörperoberfläche, ohne dass sich der Stromfluss zwischen zwei durch die Nut im Querschnitt des Grundkörpers ausgebildete Zahnköpfe erhöht. Zur Erzielung eines hohen magnetischen Flusses bei einem brückenartig ausgebildeten Nutrandbereichselement ist im Bereich der Längsachse der Nut, vorzugsweise über die gesamte Nuterstreckung eine Dicke von etwa 0,3 mm einzuhalten.

Vorzugsweise ist vorgesehen, dass das Nutrandbereichselement gewölbt oder im Wesentlichen gerade ausgebildet ist. Das Nutrandbereichselement kann dabei -in radialer Richtung des Ankers gesehen- nach innen oder nach außen gewölbt ausgebildet sein. Die Form der Wölbung kann zudem verschiedenartig sein. Die Wölbung wie auch die im Wesentlichen gerade Form des Nutrandbereichselements ergeben sich im Wesentlichen aus dem bei der Herstellung des Ankers verwendeten Werkzeug.

Bei der Herstellung des Grundkörpers ist die Nut im Querschnitt größer als der in die Nut aufzunehmende Leiter auszubilden, um den Leiter in die Nut einstecken zu können. Dadurch weist der Leiter nach dem Einstecken in der Nut ein Bewegungsspiel auf, durch welches bei den im Stand der Technik beschriebenen Ankern während der Rotation eine Unwucht im Anker verursacht wird. Bei dem erfindungsgemäßen Anker wird die Nut durch mechanische Verformung derart im Querschnitt verändert, dass der Leiter kein Bewegungsspiel in der Nut aufweist oder zumindest in seinem Bewegungsspiel verringert ist. Um eine besonders vorteilhafte Ausgestaltung des erfindungsgemäßen Ankers zu erzielen, ist vorgesehen, dass das Nutrandbereichselement vor der Verformung die Peripherie des Grundkörpers überragt. Aufgrund dieser Ausbildung der Nut ist es möglich, dass der Durchmesser des Grundkörpers verkleinert ausgebildet werden kann und zwar in dem Maße, in dem die Nut in Radialrichtung des Grundkörpers mittels der Verformung des Nutrandbereichselements gestaucht wird. Aufgrund des kleineren Durchmessers des Grundkörpers ist es vorteilhafterweise möglich, den gesamten Anker kompakter und mit weniger Gewicht zu bauen. Ferner weist der Grundkörper ein geringeres Massenträgheitsmoment auf, wodurch der Anker verschleißärmer betreibbar ist. Eine vor der Verformung die Peripherie des Grundkörpers überragende Anordnung der Nut ermöglicht ferner eine Verlegung der Nut -in radialer Richtung des Ankers gesehen- nach außen. Sofern die Abstände der über den Umfang des Grundkörpers verteilt angeordneten Nuten bei einer solchen Verlegung der Nutposition zueinander unverändert bleiben, kann dadurch die Nut in ihrer Breite größer ausgebildet werden, was den Einsatz von Leitern mit größerem Durchmesser ermöglicht. Sofern die Nutbreite bei einer solchen Verlegung der Nutposition unverändert bleibt, ist es möglich, den Abstand der über den Umfang des Grundkörpers verteilt angeordneten Nuten, also die Zahnbreite des Grundkörpers, entsprechend der spielreduzierenden Verlagerung des Nutrandbereichselements zu vergrößern.

Weiterhin ist vorgesehen, dass das brückenartig ausgebildete Nutrandbereichselement vor der Verformung wenigstens eine Einkerbung aufweist. Beim Verformen des Nutrandbereichselements können damit vorteilhafterweise unter Aufzehrung der Einkerbungen am Nutrandbereichselement auftretende Verwerfungen verringert werden.

Weitere Ausgestaltungen des Ankers ergeben sich aus den übrigen Unteransprüchen.

Das erfindungsgemäße Verfahren mit den in Anspruch 12 genannten Merkmalen zeichnet sich dadurch aus, dass zunächst mindestens ein elektrischer Leiter in mindestens eine in einem Grundkörper des Ankers angeordnete Nut eingeschoben wird, und dass dann der Leiter durch mechanisches Verformen eines Nutbereichs in der Nut definiert positioniert und/oder fixiert wird, wobei des Nutrandbereichselement stegartig - die Öffnung begrenzend - ausgebildet ist. Aufgrund der definierten Positionierung und/oder Fixierung des Leiters in der Nut ist eine reproduzierbare und präzise Anordnung des Leiters in der Nut möglich. Das erfindungsgemäße Verfahren ist besonders dazu geeignet, solche Unwuchten im Anker zu verringern beziehungsweise zu vermeiden, die von einer unkontrollierten Lage eines mit Bewegungsspiel in der Nut aufgenommenen Leiters hervorgerufen werden. Mittels des Verfahrens ist es in einfacher Weise möglich, durch Einstellung der Verformungskraft eine zur Erzielung einer gewünschten Positionierung und/oder Fixierung des Leiters in der Nut hinreichende Verformungsintensität variabel einzustellen.

Vorteilhafterweise erfolgt das Verformen im Bereich der Peripherie des Grundkörpers. Auf diese Weise ist es möglich, mit verhältnismäßig geringem Kraftaufwand den Nutbereich derart zu verformen, dass der in der Nut eingeschobene Leiter definiert positioniert und/oder fixiert wird.

Vorzugsweise wird in der Nut durch die Verformung ein Leiterrückhalteelement erzeugt. Mittels diesem Leiterrückhalteelement ist es möglich, den oder die in der Nut aufgenommenen Leiter in eine definierte Lage zu bringen und bei Rotation des Grundkörpers die Leiter in dieser Lage zu halten. Die Erzeugung eines solchen Leiterrückhalteelements ist insbesondere möglich, wenn ein Anker verwendet wird, dessen Grundkörper im Randbereich der Nut ein Nutrandbereichselement aufweist beziehungsweise wenn der Grundkörper die Bildung eines solchen Nutrandbereichselements ermöglicht.

Nach einer Weiterbildung des Verfahrens ist vorgesehen, dass durch die Verformung das am Grundkörper vorhandene Leiterrückhalteelement in eine Leiterrückhalteposition verlagert wird. Diese Verlagerung kann in der Weise erfolgen, dass die Leiter zueinander in Berührungskontakt stehen und/oder dass sie am Nutgrund beziehungsweise an den Nutwandungen zum Anliegen kommen.

Die Verformung wird vorzugsweise durch ein Verstemmen mittels eines Druckwerkzeugs, vorzugsweise mittels mindestens eines Stempels, erzeugt. Ebenso sind aber auch andere Verfahren der Kaltumformung (zum Beispiel Prägen oder Drücken) einsetzbar.

Weitere Ausführungsformen des Verfahrens ergeben sich aus den Unteransprüchen.

### Zeichnungen

Die Erfindung wird nachfolgend in verschiedenen Ausführungsbeispielen anhand der zugehörigen Zeichnungen näher erläutert. Es zeigen:
- Figur 1: eine quergeschnittene Ankernut mit einem brückenartig ausgebildeten Nutrandbereichselement vor und nach der Verformung nach einem ersten Ausführungsbeispiel,
- Figur 2: eine quergeschnittene Ankernut mit einem brückenartig ausgebildeten Nutrandbereichselement vor und nach der Verformung nach einem zweiten Ausführungsbeispiel,
- Figur 3: eine quergeschnittene Ankernut mit einem brückenartig ausgebildeten Nutrandbereichselement vor und nach der Verformung nach einem dritten Ausführungsbeispiel und
- Figur 4: eine quergeschnittene Ankernut mit einem stegartig ausgebildeten Nutrandbereichselement vor und nach der Verformung.

### Beschreibung der Ausführungsbeispiele

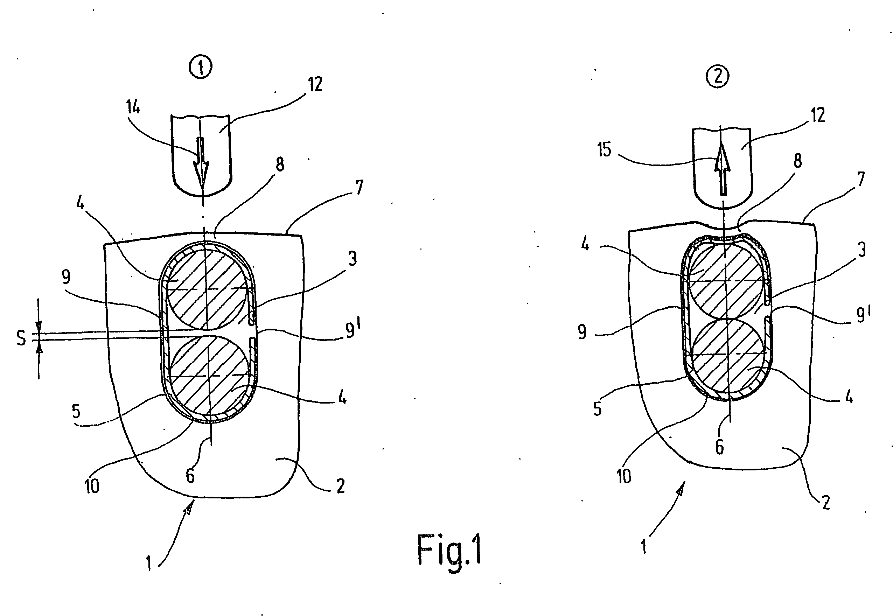

In Figur 1 ist ein Detailbereich eines Ankers 1 dargestellt, der einen Grundkörper 2 des Ankers 1 mit einer im Grundkörper 2 angeordneten Nut 3 und zwei in der Nut 3 aufgenommene elektrische Leiter 4 zeigt. Die Nut 3 weist eine langlochartige Form auf, wobei sich die Längsachse 6 der Nut 3 in radialer Richtung des Grundkörpers 2 erstreckt. In der Nut 3 ist ein hülsenartiges Isolierelement 5 angeordnet, das sich an den Wandungen der Nut 3 anschmiegt und in dem sich die beiden elektrischen Leiter 4 befinden. Die Leiter 4 sind in diesem Ausführungsbeispiel im Querschnitt rund ausgebildet. Die Nut 3 erstreckt sich in ihrer Längsachse 6 in radialer Richtung des Ankers 1 derart, dass sie bis in die Nähe der Mantelfläche 7 des Grundkörpers 2 reicht. Im Bereich dieser Mantelfläche 7 ist die Nut 3 mittels eines Nutrandbereichselements 8, das sich in diesem Ausführungsbeispiel brückenartig von einer Seitenwand 9 zu einer gegenüberliegenden Seitenwand 9' der Nut 3 erstreckt, im Querschnitt geschlossen ausgebildet. Das Nutrandbereichselement 8 ist einstückig mit dem Grundkörper 2 verbunden.

Position eins (linke Abbildung) zeigt den Anker 1 vor der Verformung. Die beiden in der Nut 3 aufgenommenen elektrischen Leiter 4 weisen in Richtung der Längsachse 6 der Nut 3 zueinander ein Bewegungsspiel S auf. Dieses Bewegungsspiel S ist erforderlich, um die Leiter 4 in die Nut 3 einstecken zu können. Daher ist die Nut 3 im Querschnitt größer ausgebildet als die beiden Leiter 4. Um das Bewegungsspiel S zu verringern und gegebenenfalls ganz zu vermeiden, erfolgt eine Verformung des Nutrandbereichselements 8. Zu dieser Verformung des Nutrandbereichselements 8 wird ein Stempel 12 aus einer Ausgangsposition in Richtung des Nutrandbereichselements 8 gemäß Pfeil 14 gedrängt.

Der mittels des Stempels 12 verformte Anker 1 ist in Position zwei der Figur 1 (rechte Abbildung) gezeigt. Der Stempel 12 wurde derart auf das Nutrandbereichselement 8 gedrückt, dass dieses eine nach innen gewölbte Verformung aufweist, wobei die Wölbung durch die Form des Stempels 12 im Stempelbereich hervorgerufen wird. Mittels dieser Verformung des Nutrandbereichselements 8 kommt es zu einem Berührungskontakt zwischen den beiden elektrischen Leitern 4, zwischen dem Nutgrund 10 und dem diesen nächstbenachbarten Leiter 4 sowie zwischen dem Nutrandbereichselement 8 und dem diesen nächstbenachbarten Leiter 4. Die elektrischen Leiter 4 sind damit in Richtung der Längsachse 6 der Nut 3 bewegungsspielfrei angeordnet und zwar derart, dass bei Rotation des Ankers 1 eine Fixierung der elektrischen Leiter 4 gewährleistet ist. Die mittels des Stempels 12 erzeugte Verformung bleibt bestehen, wenn der Stempel 12 gemäß Pfeil 15 in Ausgangsposition zurückbewegt wird.

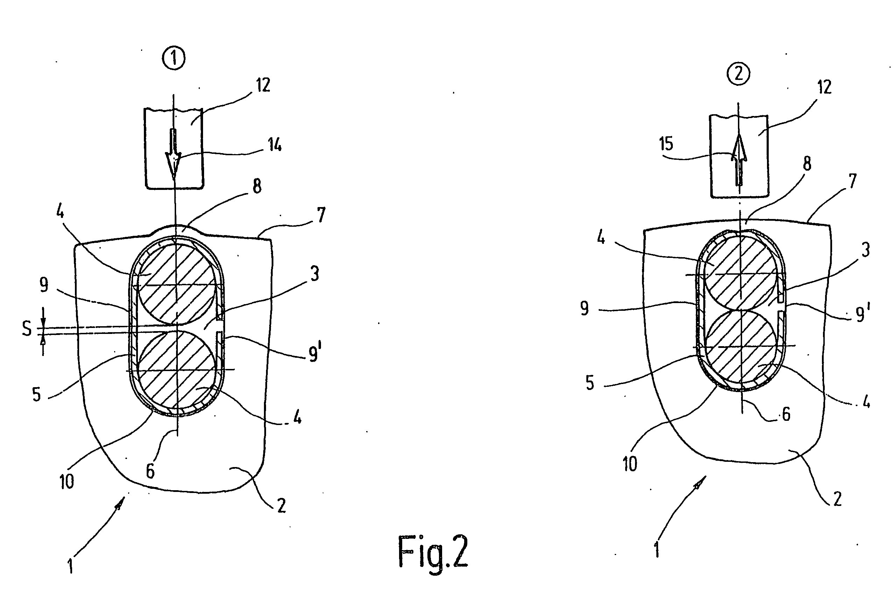

Figur 2 zeigt den Anker 1 nach einem zweiten Ausführungsbeispiel. Gleiche Teile sind mit gleichen Bezugsziffern versehen, so dass insoweit auf die Beschreibung zu Figur 1 verwiesen wird. Im Unterschied zu Figur 1 ist in dem hier dargestellten Ausführungsbeispiel das Nutrandbereichselement 8 vor der Verformung (siehe Position eins) derart angeordnet, dass es die Peripherie des Grundkörpers 2 überragt. In dieser Anordnung ist das Nutrandbereichselement 8 so ausgebildet, dass die Innenseite des Nutrandbereichselements 8, das heißt die dem Nutgrund 10 zugewandte Seite, sich an die Kontur des nächst benachbarten elektrischen Leiters 4 anschmiegt. Aufgrund dieser die Peripherie des Grundkörpers 2 überragenden Ausbildung des Nutrandbereichselements 8 ist in diesem Ausführungsbeispiel der Grundkörper 2 im Durchmesser kleiner ausgebildet als im Ausführungsbeispiel von Figur 1. Damit weist der hier dargestellte Anker 1 im Querschnitt eine kompaktere Ausbildung auf. Das Nutrandbereichselement 8 wird mittels des im Stempelbereich gerade ausgebildeten Stempels 12 derart verformt, dass sich das Nutrandbereichselement 8 im verformten Zustand (siehe Position zwei) in der Peripherie des Grundkörpers 2 befindet.

Gemäß einer nicht dargestellten Ausführungsform überragt das Nutrandbereichselement 8 -wie im Ausführungsbeispiel von Figur 2-die Peripherie des Grundkörpers 2, wobei dieses Überragen hier dadurch zustande kommt, dass die Position der Nut 3 um das Bewegungsspiel S der in der Nut 3 aufgenommen Leiter 4 -in Radialrichtung des Grundkörpers 2 gesehennach außen verlegt ist. Der Durchmesser des Grundkörpers 2 bleibt in diesem Ausführungsbeispiel unverändert und entspricht dem Durchmesser des Grundkörpers 2 aus dem Ausführungsbeispiel gemäß Figur 1. Durch die Verlagerung der Nutposition radial nach außen sind bei diesem, hier nicht dargestellten Ausführungsbeispiel die beiden Seitenwände 9, 9' der Nut 3 weiter voneinander beabstandet als bei den in den Figuren 1 bis 4 dargestellten Ausführungsbeispielen.

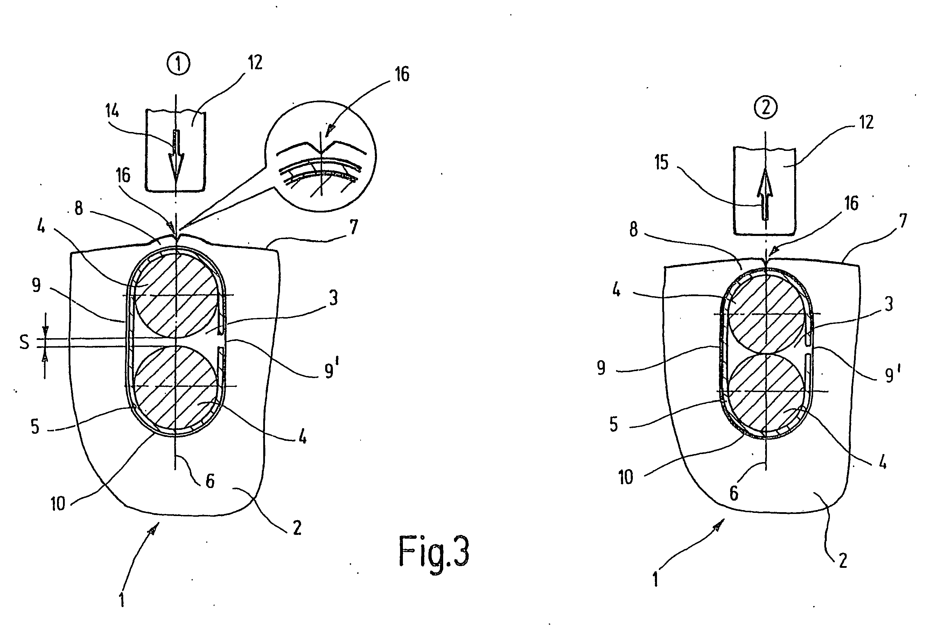

In der Figur 3 ist ein weiteres Ausführungsbeispiel des Ankers 1 gezeigt, wobei gleiche Teile wie in den vorhergehenden Figuren mit gleichen Bezugszeichen versehen und nicht nochmals erläutert sind. Das Nutrandbereichselement 8 weist vor der Verformung (siehe Position eins) auf der nach außen zum Stempel 12 zugewandten Seite eine im Querschnitt V-förmige Einkerbung 16 auf. Die Einkerbung 16 erstreckt sich parallel zum Querschnitt der Nut 3, wobei deren Spitze durch die Längsachse 6 der Nut 3 verläuft. Mittels einer solchen Einkerbung 16 werden Verwerfungen vermieden, die bei der Verformung am Nutrandbereichselement 8 auftreten. Die im unverformten Zustand eingebrachte im Querschnitt V-förmige Einkerbung 16 wird dabei an ihren Schenkeln zusammengedrückt und zwar soweit, bis die Einkerbung 16 nur noch leicht geöffnet ist. Da ein magnetischer Fluss über die Schenkel der im Querschnitt V-förmigen Einkerbung zu vermeiden ist, werden die Schenkel nicht in Anlagekontakt gebracht.

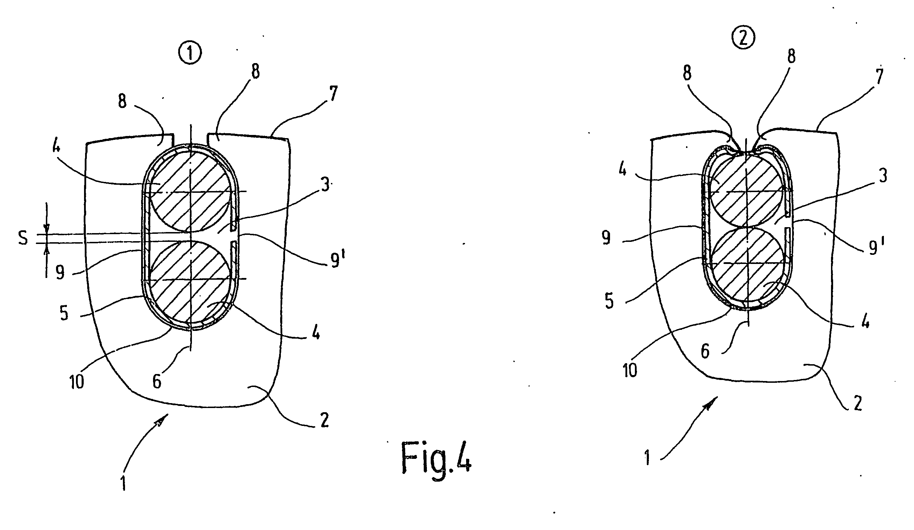

In dem in Figur 4 gezeigten Ausführungsbeispiel ist die im Grundkörper 2 angeordnete Nut 3 im Bereich der Mantelfläche 7 offen ausgebildet. An jeder Seitenwand 9, 9' der Nut 3 befindet sich im zur Mantelfläche 7 des Grundkörpers 2 zugewandten Bereich jeweils ein stegartig ausgebildetes Nutrandbereichselement 8, mittels derer die Öffnung der Nut begrenzt ist. Die Fixierung der beiden in der Nut 3 aufgenommen elektrischen Leiter 4 erfolgt in diesem Ausführungsbeispiel dadurch, dass die beiden Nutrandbereichselemente 8 in Richtung Nutgrund verformt werden. Dabei bleibt die Nut 3 nach außen hin geöffnet.

## Patentansprüche

1. Anker (1) für eine elektrische Maschine, insbesondere für einen elektrischen Starter, mit einem ferromagnetischen Grundkörper (2), in dem mindestens eine axial verlaufende Nut (3) angeordnet ist, in der mindestens ein elektrischer Leiter (4) in Nutlängserstreckung aufgenommen ist, wobei mindestens ein, mittels mechanischer Verformung des Grundkörpers (2) verlagertes, den elektrischen Leiter (4) zu dessen definierten Positionierung und/oder Fixierung beaufschlagendes Nutrandbereichselement (8), **dadurch gekennzeichnet, dass** das Nutrandbereichselement (8) stegartig - die Öffnung begrenzend - ausgebildet ist.

2. Anker nach Anspruch 1, **dadurch gekennzeichnet, dass** sich die Nut (3) bis zu einer Mantelfläche (7) des Grundkörpers (2) erstreckt oder bis in die Nähe der Mantelfläche (7) reicht und dass sich das Nutrandbereichselement (8) in der Nähe der Mantelfläche (7) befindet.

3. Anker nach einem der vorhergehenden Ansprüche, **dadurch gekennzeichnet, dass** der Querschnitt der Nut (3) langlochartig ausgebildet ist und dass sich die Längsachse (6) des Langlochs in Radialrichtung des Ankers (1) erstreckt.

4. Anker nach einem der vorhergehenden Ansprüche, **dadurch gekennzeichnet, dass** das Nutrandbereichselement (8) einstückig mit dem Grundkörper (2) ausgebildet ist.

5. Anker nach einem der vorhergehenden Ansprüche, **dadurch gekennzeichnet, dass** sich das Nutrandbereichselement (8) über die vollständige Nutlänge erstreckt oder dass mehrere Nutrandbereichselemente (8) über die Nutlänge verteilt angeordnet sind.

6. Anker nach einem der vorhergehenden Ansprüche, **dadurch gekennzeichnet, dass** das Nutrandbereichselement (8) eine Dicke von 0,1 mm bis 0,5 mm, vorzugsweise 0,3 mm, aufweist.

7. Anker nach einem der vorhergehenden Ansprüche, **dadurch gekennzeichnet, dass** das Nutrandbereichselement (8) in Richtung auf den Nutgrund (10) plastisch verformt ist.

8. Anker nach einem der vorhergehenden Ansprüche, **dadurch gekennzeichnet, dass** das Nutrandbereichselement (8) gewölbt oder im Wesentlichen gerade ausgebildet ist.

9. Anker nach einem der vorhergehenden Ansprüche, **dadurch gekennzeichnet, dass** das Nutrandbereichselement (8) vor der Verformung die Peripherie des Grundkörpers (2) überragend angeordnet ist.

10. Anker nach einem der vorhergehenden Ansprüche, **dadurch gekennzeichnet, dass** das brückenartig ausgebildete Nutrandbereichselement (8) vor der Verformung wenigstens eine Einkerbung (16) aufweist.

11. Anker nach einem der vorhergehenden Ansprüche, **dadurch gekennzeichnet, dass** der elektrische Leiter (4) gegen den Nutgrund (10) und/oder gegen jeweils benachbarte elektrische Leiter (4) gedrängt ist.

12. Verfahren zur Herstellung eines Ankers (1) für eine elektrische Maschine gemäß einem oder mehreren der vorhergehenden Ansprüche, bei welchem zunächst mindestens ein elektrischer Leiter (4) in mindestens eine in einem Grundkörper (2) des Ankers (1) angeordnete Nut (3) eingeschoben wird, und dann der Leiter (4) durch Verformen eines Nutbereichs in der Nut (3) definiert positioniert und/oder fixiert wird, **dadurch gekennzeichnet, dass** das Nutrandbereichselement (8) stegartig - die Öffnung begrenzend - ausgebildet ist.

13. Verfahren nach Anspruch 11, **dadurch gekennzeichnet, dass** das Verformen im Bereich der Peripherie des Grundkörpers (2) erfolgt.

14. Verfahren nach einem der vorhergehenden Ansprüche, **dadurch gekennzeichnet, dass** in der Nut (3) durch die Verformung ein Leiterrückhalteelement erzeugt wird.

15. Verfahren nach einem der vorhergehenden Ansprüche, **dadurch gekennzeichnet, dass** durch die Verformung ein am Grundkörper (2) vorhandenes Leiterrückhalteelement in eine Leiterrückhalteposition verlagert wird.

16. Verfahren nach einem der vorhergehenden Ansprüche, **dadurch gekennzeichnet, dass** die Verformung eine Kaltumformung ist.

17. Verfahren nach einem der vorhergehenden Ansprüche, **dadurch gekennzeichnet, dass** die Verformung als Verstemmen mittels eines Druckwerkzeugs, vorzugsweise mittels mindestens eines Stempels (12) erzeugt wird.

## Claims

1. Armature (1) for an electrical machine, in particular for an electric starter, having a ferromagnetic base body (2) in which at least one axially running slot (3) is arranged, at least one electrical conductor (4) being accommodated in the slot in the longitudinal extent of the slot, wherein at least one slot edge region element (8) is provided, said slot edge region element being displaced by means of mechanical deformation of the base body (2) and acting on the electrical conductor (4) in order to position and/or fix said electrical conductor in a defined manner, **characterized in that** the slot edge region element (8) is in the form of a web - so as to delimit the opening.

2. Armature according to Claim 1, **characterized in that** the slot (3) extends as far as a casing surface (7) of the base body (2) or reaches into the vicinity of the casing surface (7), and **in that** the slot edge region element (8) is located in the vicinity of the casing surface (7).

3. Armature according to either of the preceding claims, **characterized in that** the cross section of the slot (3) is in the form of an elongate hole, and **in that** the longitudinal axis (6) of the elongate hole extends in the radial direction of the armature (1).

4. Armature according to one of the preceding claims, **characterized in that** the slot edge region element (8) is integrally formed with the base body (2).

5. Armature according to one of the preceding claims, **characterized in that** the slot edge region element (8) extends over the entire length of the slot, or **in that** a plurality of slot edge region elements (8) are arranged in a manner distributed over the length of the slot.

6. Armature according to one of the preceding claims, **characterized in that** the slot edge region element (8) has a thickness of 0.1 mm to 0.5 mm, preferably 0.3 mm.

7. Armature according to one of the preceding claims, **characterized in that** the slot edge region element (8) is plastically deformed in the direction of the slot base (10).

8. Armature according to one of the preceding claims, **characterized in that** the slot edge region element (8) is curved or substantially straight.

9. Armature according to one of the preceding claims, **characterized in that** the slot edge region element (8) is arranged so as to project beyond the periphery of the base body (2) before the deformation.

10. Armature according to one of the preceding claims, **characterized in that** the bridge-like slot edge region element (8) has at least one notch (16) before the deformation.

11. Armature according to one of the preceding claims, **characterized in that** the electrical conductor (4) is forced against the slot base (10) and/or against respectively adjacent electrical conductors (4).

12. Method for producing an armature (1) for an electrical machine according to one or more of the preceding claims, in which method at least one electrical conductor (4) is initially pushed into at least one slot (3) which is arranged in a base body (2) of the armature (1), and the conductor (4) is then positioned and/or fixed in the slot (3) in a defined manner by deformation of a slot region, **characterized in that** the slot edge region element (8) is in the form of a web - so as to delimit the opening.

13. Method according to Claim 11, **characterized in that** the deformation takes place in the region of the periphery of the base body (2).

14. Method according to one of the preceding claims, **characterized in that** a conductor-retaining element is produced in the slot (3) by the deformation.

15. Method according to one of the preceding claims, **characterized in that** a conductor-retaining element which is present on the base body (2) is displaced into a conductor-retaining position by the deformation.

16. Method according to one of the preceding claims, **characterized in that** the deformation is a cold forming.

17. Method according to one of the preceding claims, **characterized in that** the deformation is generated as caulking using a pressing tool, preferably using at least one die (12).

## Revendications

1. Induit (1) pour machine électrique, en particulier pour démarreur électrique, l'induit présentant un corps ferromagnétique de base (2) dans lequel est ménagé au moins une rainure axiale (3) qui loge au moins un conducteur électrique (4) dans le sens de la longueur de la rainure, au moins un élément (8) de bordure de rainure qui sollicite le conducteur électrique (4) pour le positionner et/ou le fixer de manière définie étant déplacé par déformation mécanique du corps de base (2), **caractérisé en ce que**
l'élément (8) de bordure de rainure a une configuration en nervure qui délimite l'ouverture.

2. Induit selon la revendication 1, **caractérisé en ce que** la rainure (3) s'étend jusqu'à une surface d'enveloppe (7) du corps de base (2) ou jusqu'à proximité de la surface d'enveloppe (7) et **en ce que** l'élément (8) de bordure de rainure est situé à proximité de la surface d'enveloppe (7).

3. Induit selon l'une des revendications précédentes, **caractérisé en ce que** la section transversale de la rainure (3) a la configuration d'un trou oblong et **en ce que** l'axe longitudinal (6) du trou oblong s'étend dans la direction radiale de l'induit (1).

4. Induit selon l'une des revendications précédentes, **caractérisé en ce que** l'élément (8) de bordure de rainure est formé d'un seul tenant avec le corps de base (2).

5. Induit selon l'une des revendications précédentes, **caractérisé en ce que** l'élément (8) de bordure de rainure s'étend sur toute la longueur de la rainure ou en ce que plusieurs éléments (8) de bordure de rainure sont répartis sur la longueur de la rainure.

6. Induit selon l'une des revendications précédentes, **caractérisé en ce que** l'élément (8) de bordure de rainure présente une épaisseur de 0,1 mm à 0,5 mm et de préférence de 0,3 mm.

7. Induit selon l'une des revendications précédentes, **caractérisé en ce que** l'élément (8) de bordure de rainure est déformé plastiquement en direction du fond (10) de la rainure.

8. Induit selon l'une des revendications précédentes, **caractérisé en ce que** l'élément (8) de bordure de rainure a une configuration bombée ou essentiellement rectiligne.

9. Induit selon l'une des revendications précédentes, **caractérisé en ce que** l'élément (8) de bordure de rainure déborde de la périphérie du corps de base (2) avant la déformation.

10. Induit selon l'une des revendications précédentes, **caractérisé en ce que** l'élément (8) de bordure de rainure configuré en forme de pont présente au moins une entaille (16) avant la déformation.

11. Induit selon l'une des revendications précédentes, **caractérisé en ce que** le conducteur électrique (4) est repoussé contre le fond (10) de la rainure et/ou contre des conducteurs électriques (4) respectifs voisins.

12. Procédé de fabrication d'un induit (1) pour machine électrique selon l'une ou plusieurs des revendications précédentes, dans lequel au moins un conducteur électrique (4) est d'abord enfoncé dans au moins une rainure (3) disposée dans un corps de base (2) de l'induit (1) et le conducteur (4) est ensuite positionné et/ou fixé de manière définie dans la rainure (3) par déformation d'une partie de la rainure, **caractérisé en ce que**
l'élément (8) de bordure de rainure est configuré en nervure qui délimite l'ouverture.

13. Procédé selon la revendication 11, **caractérisé en ce que** la déformation a lieu au niveau de la périphérie du corps de base (2).

14. Procédé selon l'une des revendications précédentes, **caractérisé en ce qu'**un élément de retenue du conducteur est formé dans la rainure (3) par la déformation.

15. Procédé selon l'une des revendications précédentes, **caractérisé en ce que** la déformation déplace un élément de retenue de conducteur prévu sur le corps de base (2) dans une position de retenue du conducteur.

16. Procédé selon l'une des revendications précédentes, **caractérisé en ce que** la déformation est une déformation à froid.

17. Procédé selon l'une des revendications précédentes, **caractérisé en ce que** la déformation est produite par coinçage au moyen d'un outil de poussée, de préférence au moyen d'au moins un poussoir (12).
